Europäisches Patentamt

European Patent Office

Office européen des brevets

(19)

(11) Veröffentlichungsnummer: **0 023 634**
**B1**

(12) **EUROPÄISCHE PATENTSCHRIFT**

(45) Veröffentlichungstag der Patentschrift:
**02.05.85**

(21) Anmeldenummer: **80104187.2**

(22) Anmeldetag: **17.07.80**

(51) Int. Cl.⁴: **C 08 J 5/24,** C 08 F 283/00,
C 08 L 67/06, C 08 J 3/28

(54) **Verfahren zur Herstellung von Formkörpern aus ungesättigten Polyesterharzen.**

(30) Priorität: **04.08.79 DE 2931737**

(43) Veröffentlichungstag der Anmeldung:
**11.02.81 Patentblatt 81/6**

(45) Bekanntmachung des Hinweises auf die Patenterteilung:
**02.05.85 Patentblatt 85/18**

(84) Benannte Vertragsstaaten:
**BE CH DE FR GB IT LI NL SE**

(56) Entgegenhaltungen:
**AT - B - 262 618**
**DE - A - 2 409 973**
**DE - A - 2 831 679**
**GB - A - 1 422 778**
**US - A - 3 721 722**
**US - A - 3 737 481**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft,**
**Carl-Bosch-Strasse 38, D-6700 Ludwigshafen (DE)**

(72) Erfinder: **Hesse, Anton, Dr., Peter-Nickel-Strasse 15,**
**D-6946 Luetzelsachsen (DE)**
Erfinder: **Scholz, Dankmar, Heidelberger Ring 31,**
**D-6710 Frankenthal (DE)**
Erfinder: **Nicolaus, Walter, Blockfeldstrasse 36,**
**D-6704 Mutterstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Formkörpern aus ungesättigten Polyesterharzen, die zu lagerstabilen Halbzeugen eingedickt und nach der Verformung durch UV-Bestrahlung ausgehärtet werden.

Man hat schon verschiedene Versuche unternommen, möglichst lagerstabile und klebfreie Halbzeuge auf der Basis von ungesättigten Polyesterharzen herzustellen, die vor der Aushärtung in die gewünschte Form gebracht werden können.

So kann man beispielsweise eine faserverstärkte Mischung aus einem ungesättigten Polyester, einem copolymerisierbaren Monomeren und einem Fotoinitiator durch UV-Bestrahlung nur teilweise härten, das enstandene, flexible Halbzeug vor weiterer Bestrahlung schützen, verformen und dann durch erneute Bestrahlung vollends aushärten. Eine solche Arbeitsweise ist zum Beispiel in der DE-OS 2 317 945 beschrieben. Es hat sich jedoch gezeigt, dass dabei nach der Verformung Laminatschäden, z.B. Delaminierung und Weissbruch, auftreten. Ausserdem behalten die Halbzeuge nach Aufhebung der Belastung ihre Form nicht vollständig bei, so dass dieses Verfahren zur Herstellung hochwertiger Formkörper nicht geeignet ist.

Ein anderes Verfahren besteht darin, eine Mischung aus einem ungesättigten Polyester, einem copolymerisierbaren Monomeren, einem thermoplastischen, gesättigten Polymeren und einem Fotoinitiator durch Erwärmen zu einem Halbzeug zu gelieren, dieses Halbzeug zu verformen und durch Bestrahlung auszuhärten (siehe z.B. DE-OS 2 409 973). Das dabei nach der Gelierung entstehende Halbzeug ist jedoch so klebrig, dass sich Abdeck- und Trägerfolien nicht einwandfrei entfernen lassen. Bei dem erforderlichen hohen Thermoplastgehalt wird die Viskosität der Mischungen so hoch, dass die Herstellung luftblasenfreier Laminate erschwert ist.

Auch die DE-OS 2 831 679 beschreibt lichthärtbare, faserverstärkte Prepregs, die durch Quellung thermoplastischer Polymerzusätze (z.B. Celluloseester oder Vinylchloridcopolymere) in reaktiven Harzen hergestellt werden. Auf Seite 1 wird im 1. Absatz ausgeführt, dass mit Magnesiumoxid gelierte Prepregs beim Versuch einer Verformung in der Kälte brechen und zerbröseln. Dies stellt ein ganz massives Vorurteil gegen die Verwendung von mit Magnesiumoxid eingedickten Mischungen für verformbare und lichthärtbare Halbzeuge dar.

In der DE-OS 2 264 181 sind lichthärtbare, verformbare Halbzeuge beschrieben, die durch Umsetzung von ungesättigten Polyestern mit Polyurethan-Vorläufern hergestellt werden. Versucht man, nach diesem Verfahren faserverstärkte Formkörper herzustellen, so stellt man auch hier nach der Verformung des Halbzeugs Laminatschädigungen fest, die nach der UV-Bestrahlung im ausgehärteten Formkörper als Weissbruchlinien sichtbar bleiben. Schliesslich ist es auch bekannt, ungesättigte Polyesterharze durch Zusatz von Erdalkalioxiden zu sogenannten Prepregs von lederartiger Konsistenz einzudicken. Sie sind in der Wärme fliessfähig und können unter Druck auch komplizierte Formen ausfüllen. Die Verarbeitung geschieht ausschliesslich durch Verpressen der Prepregs bei erhöhten Temperaturen, wobei gleichzeitig die thermische Aushärtung stattfindet. Gewöhnlich werden derartigen Formmassen verhältnismässig grosse Mengen an thermoplastischen Niederschrumpfkomponenten (Polyvinylacetat, schlagfest modifiziertes Polystyrol) zugesetzt, die bei der Aushärtung zur Ausbildung von zwei Polymerphasen führen und somit die Lichttransparenz herabsetzen. Meist enthalten sie auch nicht transparente Füllstoffe, wie Calciumcarbonat und Dolomit. Eine Lichthärtung eingedickter Gemisch unter Verwendung von Fotoinitiatoren lag also nicht ohne weiteres nahe und bedurfte erheblicher Abwandlungen in der Zusammensetzung der Gemische und der Verarbeitungsbedingungen.

In der AT-PS 262 618 ist ein Verfahren zum Herstellen von Bahnen aus füllstoffhaltigen Polyesterformmassen beschrieben. Dabei handelt es sich um typische «bulk molding compounds» mit hohem Füllstoff: Harz-Verhältnis, die mit Magnesiumoxid eingedickt sind. Sie werden durch Kalandrieren oder Extrudieren zu Bahnen geformt und bei höheren Temperaturen mit Hilfe von Peroxiden gehärtet. Derartige Massen sind nicht ohne weiteres durch einfachen Ersatz der Peroxide durch Fotoinitiatoren fotohärtbar.

In der DE-OS 2 132 587 ist ein Verfahren zur Herstellung von Formmassen aus ungesättigten Polyestern, Monomeren und Fotoinitiatoren beschrieben, bei dem das Polyesterharz vor dem Zumischen des Fotoinitiators mit Erdalkalioxiden behandelt wird. Die Anwesenheit von Füllstoffen oder Verstärkungsfasern ist nicht vorgesehen; die Formmassen weisen eine sehr niedrige Viskosität auf und werden auch nicht zu Formkörpern, sondern zu Überzügen verarbeitet und ausgehärtet.

Der vorliegenden Erfindung lag nun die Aufgabe zugrunde, ein Verfahren zur Herstellung von Formkörpern aus ungesättigten Polyesterharzen zu entwickeln, bei dem in einer ersten Stufe ein lagerfähiges, klebfreies Halbzeug hergestellt wird, welches dann in einer zweiten Stufe nach beliebigen Verfahren verformt und schliesslich ausgehärtet werden kann. Die entstehenden Formkörper sollen keine Laminatschäden aufweisen, d.h. keine Delaminierung und keinen Weissbruch zeigen.

Diese Aufgabe wird erfindungsgemäss gelöst, wenn man ausgeht von einem Gemisch aus
1. einem ungesättigten Polyester,
2. einer copolymerisierbaren Vinylverbindung,
3. 0,005 bis 0,5 Gew.% eines Inhibitors,
4. 0,01 bis 1 Gew.% eines Fotoinitiators,
5. 0,2 bis 5 Gew.% eines als Eindickmittel wirkenden Oxids oder Hydroxids von Lithium, Magnesium oder Calcium oder eines Metallalkoholats,
6. 5 bis 60 Gew.% eines faserförmigen Verstärkungsmaterials, gegebenenfalls

7. mindestens 1 Gew.% eines UV-Licht-durchlässigen pulverförmigen Füllstoffes, sowie gegebenenfalls

8. weiteren üblichen Zusatzstoffen,

wobei sich die Prozentangaben auf das Gemisch beziehen, mit der Massgabe, dass auf 100 Gewichtsteile der Komponenten 1 + 2 maximal 100 Gewichtsteile der Komponente 7 eingesetzt werden.

Dieses Gemisch wird durch Mischen der Komponenten hergestellt (A), gegebenenfalls auf ein flächiges Trägermaterial aufgetragen (B) und zu einem Halbzeug eingedickt (C). Das Halbzeug wird dann verformt (D) durch Bestrahlung mit UV-Licht gehärtet (E) und gegebenenfalls einer thermischen Nachbehandlung (F) unterworfen.

Zu den Ausgangskomponenten 1 bis 8 ist folgendes auszuführen:

1. Als ungesättigte Polyester eignen sich die üblichen Kondensationsprodukte aus mehrwertigen, insbesondere zweiwertigen Carbonsäuren und deren veresterbaren Derivaten, insbesondere deren Anhydride, die mit mehrwertigen, insbesondere zweiwertigen Alkoholen esterartig verknüpft sind, und gegebenenfalls zusätzlich Reste einwertiger Carbonsäuren, einwertiger Alkohole oder Reste von Hydroxycarbonsäuren enthalten, wobei zumindest ein Teil der Reste über äthylenisch ungesättigte copolymerisierbare Gruppen verfügen muss. Als mehrwertige, insbesondere zweiwertige, gegebenenfalls ungesättigte Alkohole eignen sich die üblichen insbesondere acyclische Gruppen, cyclische Gruppen als auch beide Arten von Gruppen aufweisende Alkandiole und Oxaalkandiole, wie z. B.
Äthylenglykol, Propylenglykol-1,2,
Propandiol-1,3, Butylenglykol-1,3,
Butandiol-1,4, Hexandiol-1,6,
2,2-Dimethylpropandiol-1,3, Diäthylenglykol,
Triäthylenglykol, Polyäthylenglykol,
Cyclohexandiol-1,2,
2,2-Bis-(p-hydroxycyclohexyl)-propan,
Trimethylolpropanmonoallyläther oder
Butendiol-1,4.

Ferner können ein-, drei- oder höherwertige Alkohole, wie z. B.
Äthylhexanol, Fettalkohole,
Benzylalkohole, 1,2-Di-(allyloxy)-propanol-(3),
Glycerin, Pentaerythrit oder Trimethylolpropan in untergeordneten Mengen mitverwendet werden. Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren bzw. deren kondensierbaren Derivaten umgesetzt.

Geeignete Carbonsäuren bzw. deren Derivate sind zweibasische olefinisch ungesättigte, vorzugsweise $\alpha,\beta$-olefinisch ungesättigte Carbonsäuren, wie z. B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte, sowie aromatische Carbonsäuren, wie z. B.
Bernsteinsäure, Glutarsäure,
$\alpha$-Methylglutarsäure, Adipinsäure,
Sebacinsäure, Pimelinsäure,
Phthalsäureanhydrid, o-Phthalsäure,
Isophthalsäure, Terephthalsäure,
Dihydrophthalsäure, Tetrahydrophthalsäure,
Tetrachlorphthalsäure,
3,6-Endomethylen-1,2,3,6-tetra-hydrophthalsäure,
Endomethylentetrachlorphthalsäure oder Hexachlorendomethylentetrahydrophthalsäure einkondensiert sein, ferner ein-, drei- und höherbasische Carbonsäuren, wie z. B.
Äthylhexansäure, Fettsäuren, Methacrylsäure,
Propionsäure, Benzoesäure,
1,2,4-Benzoltricarbonsäure oder
1,2,4,5-Benzoltetracarbonsäure.
Vorzugsweise verwendet werden Maleinsäure bzw. deren Anhydrid und Fumarsäure.

Das Molverhältnis von ungesättigten zu gesättigten Dicarbonsäuren liegt vorzugsweise zwischen 1 : 0 und 1 : 2,5.

Gemische ungesättigter Polyester, darunter auch solche, die in den Vinylmonomeren nur beschränkt löslich sind und leicht kristallisieren, können ebenfalls vorteilhaft eingesetzt werden. Solche leicht kristallisierende ungesättigte Polyester können z.B. aus Fumarsäure, Adipinsäure, Terephthalsäure, Äthylenglykol, Butandiol-1,4, Hexandiol-1,6 und Neopentylglykol aufgebaut sein.

Geeignet sind auch ungesättigte Polyester mit vorzugsweise endständigen Doppelbindungen.

Die ungesättigten Polyester besitzen Säurezahlen von 10 bis 100, vorzugsweise von 20 bis 60 und mittlere Molekulargewichte von ungefähr 800 bis 6000, vorzugsweise von etwa 1000 bis 4000.

Die amorphen und gegebenenfalls kristallisierbaren ungesättigten Polyester werden im allgemeinen durch Schmelzkondensation oder Kondensation unter azeotropen Bedingungen bei Temperaturen zwischen 150 und 220 °C aus ihren Ausgangskomponenten nach kontinuierlichen oder diskontinuierlichen Verfahren hergestellt.

Bezüglich der Zusammensetzung ungesättigter Polyester sei beispielsweise auch auf das Buch von H. V. Boenig, Unsaturated Polyesters: Structure and Properties, Amsterdam, 1964, verwiesen. Das Gemisch enthält im allgemeinen 10 bis 80, vorzugsweise 15 bis 70 Gew.% ungesättigten Polyester.

2. Als copolymerisierbare, äthylenisch ungesättigte monomere Verbindungen kommen die üblicherweise zum Herstellen ungesättigter Polyesterformmassen verwendeten Allyl- und vorzugsweise Vinylverbindungen in Frage, wie Styrol, substituierte Styrole, wie p-Chlorstyrol oder Vinyltoluol, Ester der Acrylsäure und Methacrylsäure mit 1 bis 18 Kohlenstoffatomen enthaltenden Alkoholen, wie
Methacrylsäuremethylester,
Acrylsäurebutylester,
Äthylhexylacrylat, Hydroxypropylacrylat,

Dihydrodicyclopentadienylacrylat,
Butandioldiacrylat und (Meth)-acrylsäureamide,
Allylester, wie
Diallylphthalat, und Vinylester wie
Äthylhexansäurevinylester,
Vinylpivalat und andere.

Desgleichen eignen sich Gemische der genannten olefinisch ungesättigten Monomeren. Bevorzugt geeignet als Komponente (b) sind Styrol, α-Methylstyrol, Chlorstyrol, Vinyltoluol, Divinylbenzol und Diallylphthalat. Die Komponente (b) ist in dem Gemisch im allgemeinen in einer Menge von 20 bis 80, vorzugsweise von 25 bis 75 Gew.% enthalten.

3. Die lichthärtbaren Formmassen werden mit den üblichen Inhibitoren stabilisiert. Beispielhaft genannt seien phenolische Inhibitoren, wie Hydrochinon, substituierte Hydrochinone, Brenzcatechin, tert.-Butylbrenzcatechin, kernsubstituierte Brenzcatechinderivate; Chinone, wie Benzochinon, Naphthochinon, Chloranil, Nitrobenzole, wie m-Dinitrobenzol, Thiodiphenylamin, N-Nitrosoverbindungen, wie N-Nitrosodiphenylamin und Salze von N-Nitroso-N-cyclohexylhydroxylamin sowie deren Gemische. Als zusätzliche Stabilisatoren eignen sich auch Salze des zweiwertigen Kupfers, beispielsweise Kupfer-naphthenate oder -octoat und quaternäre Ammoniumsalze der Struktur $NR^5R^6, R^7, R^8 \oplus X^-$, in der $R^5$, $R^6$, $R^7$ und $R^8$ einen Alkylrest mit 1 bis 20 Kohlenstoffatomen, einen Arylrest mit 6 bis 14 Kohlenstoffatomen oder einen Aralkylrest mit 7 bis 30 Kohlenstoffatomen und X ein Halogenatom, vorzugsweise Chlorid bedeuten.

Der Zusatz augewählter UV-Adsorber zur Lichtstabilisierung der Härtungsprodukte bewirkt in manchen Fällen eine geringe Herabsetzung der UV-Härtungsgeschwindigkeit, die aber auch in Kauf genommen werden kann. Geeignet sind solche aus den Reihen des Oxibenzophenons, der Salicylsäureester und des Oxiphenylbenztriazols.

Die Inhibitoren sind in dem Gemisch in einer Menge von 0,005 bis 0,5, vorzugsweise 0,01 bis 0,2 Gew.% enthalten.

4. Als Fotoinitiatoren kommen solche in Frage, die durch eingestrahltes Licht der Wellenlängen 300 bis 600 Nm zur Radikalbildung angeregt werden. Beispiele sind:
Benzilketale, z.B. Benzildimethylketal,
Benzildiäthylketal, Benzildipropylketal,
Benziolmethylallylketal, Benziolmethylbenzylketal,
Benziläthylenketal, Benzilneopentylenketal;
Benzoinäther, z.B. Benzoinisobutyläther,
Benzoinmethyläther, Benzoinäthyläther,
Benzoinisopropyläther,
Methylolbenzoinmethyläther;
α-Alkylbenzoinäther;
Benzil in Kombination mit aliphatischen Aminen
(z.B. Methyldiäthanolamin);
Acylphosphinoxide, z.B.
Pivaloyldiphenylphosphinoxid,
Para-toluyl-diphenylphosphidoxid,
2,4,6-Trimethylbenzoyldiphenylphosphinoxid,
2,6-Trimethoxybenzoyl-diphenylphosphinoxid,

2,6-Dichlorbenzoyl-diphenylphosphinoxid,
2,6,-Dimethylbenzoyl-diphenylphosphinoxid,
2,3,5,6-Tetramethylbenzoyl-diphenylphosphinoxid;
2,2-Diäthoxy-acetophenon,
2-Naphthalinsulfonylchlorid,
1-Butyl-2-Naphthalinsulfonylchlorid,
1-Chlormethylnaphthalin;
1,4-Dibutyl-2-Naphthalinsulfonylchlorid;
Disulfide, wie Diphenyldisulfid,
p,p-Ditolyldisulfid, β,β,Dinaphtyldisulfid.

Die Lichtinitiatoren werden in einem Konzentrationsbereich von 0,01 bis 1 Gew.%, vorzugsweise von 0,03 bis 0,5 Gew.% eingesetzt, wobei auch Gemische davon zur Anwendung kommen können.

5. Als Eindickmittel werden Oxide oder Hydroxide des Lithiums, Magnesiums oder Calciums, sowie Metallalkoholate, z.B. von Magnesium, Calcium, Aluminium oder Titan eingesetzt. Bevorzugt ist Magnesiumoxid. Die Eindickmittel kommen in Mengen von 0,2 bis 5, vorzugsweise von 0,5 bis 2,0 Gew.%, bezogen auf das Gemisch zur Anwendung.

6. Als Verstärkungsstoffe kommen in Frage: anorganische oder organische Fasern, oder flächige, gegebenenfalls daraus gewebte Gebilde, wie Matten, z.B. solche aus Glas, Asbest, Cellulose und synthetischen, organischen Hochpolymeren, wie Polyamid, Polyacrylnitril und Polyestern, beispielsweise Polyäthylenterephthalat. Wenn die Verstärkungsstoffe 6 in Form von Matten eingesetzt werden, ist es zweckmässig, die Komponenten 1 bis 5 und gegebenenfalls 7 und 8 vorzumischen, und mit diesem Gemisch die Matten zu tränken.

Die Verstärkungsstoffe sind in Mengen von 5 bis 60 Gew.% in dem Gemisch enthalten. Vorteilhaft wirkt sich in vielen Fällen eine Kombination von pulverigem Aluminiumoxidhydrat und faserigen Verstärkungsstoffen aus.

7. Das pulverförmige Aluminiumoxidhydrat muss für UV-Licht durchlässig sein, damit die Aushärung auch bis in tiefere Schichten hinein vollständig ist. Es kann in dem Gemisch in solchen Mengen enthalten sein, dass auf 100 Gewichtsteile der Komponenten 1+2 maximal 100 Gewichtsteile der Komponente 7 kommen.

8. Als weitere übliche Zusatzstoffe kommen z.B. Gleitmittel, wie Metallstearate, insbesondere solche des Magnesiums und Calciums, oder Polyäthylenwachse, in Frage. In Mengen von 1 bis 8 Gew.-%, bezogen auf das Gemisch, zugesetzt, vermindern sie die Klebrigkeit des Halbzeugs.

Zusätzlich zu den Eindickmitteln (Komponente 5) können dem Gemisch noch 0,05 bis 2 Gew.% Eindickbeschleuniger zugesetzt werden. Als solche eignen sich Ammoniumchloride (Trimethylbenzylammoniumchlorid, Trimethylcyclohexylammoniumchlorid oder Cholinchlorid), Phosphoniumchloiride (z.B. Triphenylmethylphosphoniumchlorid) und Sulfoniumhalogenide. Als weitere Eindickbeschleuniger können Wasser (in Mengen von 0,1 bis 0,5 Gew.%) sowie Poylole (Äthylenglykol oder Propandiol-1,2- in Mengen von 0,2 bis 2 Gew.%) dienen.

Zur Verminderung der Monomerenverdunstung und zur Ausbildung einer klebfreien Oberfläche können die Gemische 0,01 bis 5 Gew.%, vorzugsweise 0,1 bis 0,5 Gew.% Paraffine enthalten. Bevorzugt sind Paraffine mit Schmelzpunkten von 25 bis 90 °C, vorzugsweise von 45 bis 60 °C. Anstelle der Paraffine können auch andere wachsartige Stoffe, beispielsweise die als Montanwachs bekannten Paraffinoxidationsprodukte bzw. deren Ester, langkettige Fettsäuren, wie Stearinsäure, Stearylstearat und dergleichen eingesetzt werden.

Als zusätzliche Initiatoren können dem Gemisch neben den Fotoinitiatoren auch noch thermisch zerfallende Radikalbildner in Mengen von 0,05 bis 2,0 Gew.% zugesetzt werden, z.B. Perester, wie
tert.-Butylperoctoat, tert.-Butylperpivalat;
Percarbonate, wie
Bis-4-tert.-butylcyclohexyl-peroxidicarbonat;
Diacylperoxide, wie
Benzoylperoxid; Dialkylperoxide, wie
Di-tert.-butylperoxid und Dicumylperoxid;
Azoverbindungen, wie
Azodiisobutyronitril;
sowie C-C-labile Verbindungen wie
Tetraphenylbernsteinsäuredinitril,
Tetraphenyläthandiol oder
tetrasubstituierte Dibenzylverbindungen.

Schliesslich können auch schrumpfungsmindernde Zusätze, beispielsweise thermoplastische Polymere, wie Polystyrol, Styrolcopolymerisate, Polyvinylacetat oder Polymethacrylate in Mengen von 1 bis 20 Gew.-% zugesetzt werden.

Die Herstellung der Formkörper verläuft in mehreren Verfahrensschritten:

A) Zunächst werden die oben beschriebenen Komponenten homogen vermischt. Dies kann in offenen Gefässen z.B. durch kräftiges Rühren geschehen. Werden die faserförmigen Verstärkungsmaterialien (Komponente 6) in Form von Matten, Geweben oder Vliesen eingesetzt, so tränkt man diese zweckmässigerweise mit dem flüssigen Gemisch der anderen Komponenten.

B) In den meisten Fällen ist es zweckmässig, das flüssige Gemisch auf einem Trägermaterial aufzubringen. Als Trägermaterialien kommen z.B. Kunststoff-Folien, insbesondere Polyester-, Polyvinylalkohol- oder Celluloseeester-Folien, beschichtete Papiere, dünne Schichten (vorzugsweise 0,05 bis 1 mm dick) aus ausgehärteten ungesättigen Polyesterharzen, sowie Metallbänder in Frage. Oft ist es auch zweckmässig, die aufgetragene Schicht des Gemisches mit einer Folie aus gleichem Material zu bedecken. Dadurch wird die Verdunstung von Monomeren verhindert. Auf den Trägermaterialien liegt das Gemisch im allgemeinen als flache Bahn oder als Streifen vor; die Dicke liegt dabei vorzugsweise zwischen 1 und 15 mm.

C) Im nächsten Verfahrensschritt wird das Gemisch zu einem Halbzeug eingedickt. Dies geschieht durch polymeranaloge Umsetzungen des Eindickmittels mit den Endgruppen des ungesättigten Polyesters, wobei der Viskositätsanstieg durch Molekulargewichtsvergrösserung verursacht wird. Das Eindicken kann bei Raumtemperatur erfolgen, es dauert dann im allgemeinen einige Tage. Durch Erhöhen der Temperatur bis auf max. 130 °C kann es beschleunigt werden. Bevorzugt wird bei Temperaturen zwischen 50 und 100 °C 2 bis 10 min lang eingedickt. Bei dem Eindickprozess entstehen klebfreie und lagerfähige Halbzeuge, die je nach Art und Menge der Eindickmittel, Füllstoffe bzw. Verstärkungsmaterialien pastenförmige, lederartige oder steife Konsistenz haben.

D) Im nächsten Verfahrensschritt wird das Halbzeug verformt, wobei verschiedene Methoden angewandt werden können: je nach seiner Konsistenz kann man das Halbzeug flächig ausstreichen, spachteln, walzen, kneten, biegen oder prägen. Dabei kann diskontinuierlich oder kontinuierlich gearbeitet werden. In der Praxis können die üblichen, für die Harz-Verarbeitung bekannten Verfahren angewandt werden, z.B. das Handlaminierverfahren zur Herstellung grossflächiger Formteile; das Wickelverfahren zur Herstellung von Behältern oder Rohren; das diskontinuierliche Pressverfahren zur Herstellung kleinerer Formteile in grossen Stückzahlen; das kontinuierliche Laminierverfahren zur Herstellung von ebenen oder profilierten, z.B. gewellten Platten oder Bahnen; das Profilziehen zur Herstellung von profilierten Strängen. Bei allen diesen Verfahren ergeben sich Vorteile gegenüber der konventionellen Arbeitsweise, wenn man erfindungsgemäss die leicht handhabbaren, lagerfähigen Halbzeuge einsetzt. Ein grosser Vorteil liegt insbesondere darin, dass das Material des Halbzeugs mit weiterem ungesättigtem Polyester-Material verbunden werden kann. Dabei genügt ein geringer Pressdruck, beispielsweise durch Walzen. Auf diese Weise kann man verschiedene Teile einer Bahn oder auch mehrere Bahnen miteinander durch Überlappungen verbinden, oder man kann mehrere Schichten durch Aufwickeln miteinander verbinden. Dazu ist es natürlich erforderlich, die Abdeckfolien vorher zu entfernen. Bei sehr hoher Viskosität des Halbzeugs kann es zweckmässig sein, die zu verbindenden Bereiche mit einem Fotoinitiator enthaltenden niedrigviskosen ungesättigen Polyesterharz zu bestreichen und dann erst die zu verbindenen Teile aufeinander zu pressen. Beim Pressverfahren werden zweckmässigerweise steifere, stärker eingedickte Halbzeuge verwendet. Dies wird durch Einsatz einer höheren Eindickmittel- und Füllstoff-Konzentration oder durch Mitverwendung feinteiliger kristalliner, ungesättigter Polyester erreicht. Die Halbzeuge sollen im Zuschnitt der Grösse des herzustellenden Formteils in etwa entsprechen. Sie werden in einer Pressform mit einem geringen Druck von etwa 5 bis 10 bar in wenigen Sekunden kalt verformt. Mit diesem Verfahren sind kurze Taktzeiten möglich und das energieaufwendige Beheizen der Pressen entfällt.

E) Im nächsten Verfahrensschritt wird das verformte Halbzeug durch Bestrahlen mit UV-Licht gehärtet. Dazu werden zweckmässigerweise UV-Strahler mit hoher Emmission im langwelligen Bereich (300 bis 400 nm) verwendet, deren Maximum möglichst zwischen 360 und 390 nm liegt. Vorzugsweise verwendet man Quecksilberdampfniederdrucklampen mit eingeschlämmtem Leuchtstoff (Leuchtstoffröhren) oder Quecksilberdampfhochdrucklampen. In manchen Fällen ist auch direktes Sonnenlicht ausreichend. Zufuhr von Wärme mittels Heissluft oder Infrarot-Strahlern wirkt sich beschleunigend auf die Härtung aus.

In einer besonderen Ausführungsform der Erfindung wird beim Aushärten ein Teilbereich des Halbzeugs mit einer für UV-Licht undurchlässigen Folie abgedeckt. Dazu eignen sich beispielsweise schwarz eingefärbte Kunststoff-Folien, Aluminiumfolien oder Papiere. An den abgedeckten Bereichen findet keine Härtung statt, so dass hier eine weitere Verformung bzw. eine Verbindung mit weiterem, nicht ausgehärtetem, ungesättigtem Polyester-Material möglich ist. Wenn die Bereiche als schmale Streifen ausgebildet sind, können sie als bewegliche Scharniere fungieren. Auf diese Weise ist es z.B. möglich, grossflächige Formteile (z.B. Grossbehälter) zu falten, raumsparend zu transportieren, am Bestimmungsort in der endgültigen Gestalt aufzustellen und die Scharnierbereiche nach Entfernen der lichtundurchlässigen Abdeckfolien durch Bestrahlung auszuhärten. Die ungehärteten Bereiche können ferner als Anschlussstellen für Flansche, Stutzen, Böden, Deckel usw. aus ungehärtetem Polyestermaterial dienen. Nach der Aushärtung erhält man eine feste Verbindung zwischen Anschlussstelle und angesetztem Material.

F) In manchen Fällen kann es vorteilhaft sein, die Formkörper zur Erniedrigung des Restmonomerengehaltes einer thermischen Nachhärtung zu unterwerfen. Dies ist besonders dann zweckmässig, wenn die Gemische ursprünglich schon Radikalbildner, d.h. Peroxide, Azoverbindungen oder CC-labile Verbindungen enthielten. Die Nachhärtung wird vorteilhaft bei Temperaturen zwischen 80 und 120 °C durchgeführt.

Die in den Beispielen genannten Teile und Prozente beziehen sich auf das Gewicht.

Folgende ungesättigte Polyester-Harze wurden eingesetzt:

Harz A:
ist eine mit 0,01% Hydrochinon stabilisierte 65%ige styrolische Lösung eines ungesättigten Polyesters aus Maleinsäure, o-Phthalsäure, Äthylenglykol und Propylenglykol-1,2 im Molverhältnis 1 : 2 : 2, 3 : 0,75. Der ungesättigte Polyester hat eine Säurezahl von 50.

Harz B
ist eine mit 0,01% Hydrochinon stabilisierte 67%ige styrolische Lösung eines ungesättigten Polyesters aus Maleinsäure, Tetrahydrophthalsäure und Diäthylenglykol im Molverhältnis 1 : 0,5 : 1,5. Der ungesättigte Polyester hat eine Säurezahl von 43.

Harz C
ist eine mit 0,01% Hydrochinon stabilisierte 66%ige styrolische Lösung eines ungesättigten Polyesters aus Maleinsäure, o-Phthalsäure und Propylenglykol-1,2 im Molverhältnis 1 : 0,5 : 1,5. Der ungesättigte Polyester hat eine Säurezahl von 50.

Harz D
ist eine mti 0,01% Hydrochinon stabilisierte 65%ige styrolische Lösung eines ungesättigten Polyesters aus Maleinsäure, Phthalsäure, Propylenglykol-1,2 und Diäthylenglykol im Molverhältnis 1 : 0,25 : 1 : 0,25. Der ungesättigte Polyester hat eine Säurezahl von 40.
Er enthält 0,3% Cholinchlorid, bezogen auf die styrolische Lösung.

Harz E
ist eine Mischung aus gleichen Teilen des Harzes A und einer 65%igen styrolischen Lösung eines ungesättigten Polyesters aus Maleinsäure, o-Phthalsäure und Propandiol-1,2 im Molverhältnis 1 : 0,5 : 1,5, dem 0,6% Cholinchlorid bei 150 °C in der Schmelze zugesetzt worden war, bevor nach weiterer Abkühlung auf 120 °C 0,01% Hydrochinon und schliesslich Styrol eingerührt wurden. Der Polyester hat eine Säurezahl von 46.

Harz F
ist eine Lösung aus 60% eines ungesättigten Polyesters aus Maleinsäure, Adipinsäure, Äthylenglykol und Propandiol-1,2 im Molverhältnis 1 : 0,25 : 0,65 : 0,65, 25% Diallylphthalat, 10% Trimethylolpropantriacrylat und 5% Vinylpyrrolidon. Die Säurezahl des Polyesters beträgt 50. Bei 150 °C wurden 0,3% Cholinchlorid in die Schmelze des Polyesters eingerührt.

Harz G
ist eine Kristallitsuspension aus 36% Harz B, 28% Styrol und 36% eines kristallinen Polyesters aus Fumarsäure, Adipinsäure und Butandiol-1,4 im Molverhältnis 1 : 0,25 : 1,25 mit der Säurezahl 20 und einem Schmelzbereich von 110 bis 115 °C. Zu ihrer Herstellung wurde die Mischung der Komponenten in einem Rührkolben auf 100 °C erwärmt und langsam innerhalb von 12 Stunden unter Rühren auf Raumtemperatur abgekühlt. Als Inhibitor wurde 0,01% Hydrochinon und als Eindickbeschleuniger 0,3% Cholinchlorid zugesetzt.

Beispiel 1
Zur Herstellung einer lichthärtbaren Formmasse wurde eine Glasfasermatte (Flächengewicht 400 g/m²) mit einer Mischung aus 100 Teilen Harz E, 1,75 Teilen Magnesiumoxid und 0,1 Teilen 2,4,6-Trimethylbenzoyldiphenylphosphinoxid zwischen Polyesterfolien getränkt. Der Glasgehalt des Gemisches betrug 25%. Das Gemisch wurde 15 Minuten lang bei 80 °C im Wärmeschrank eingedickt. Nach dem Abkühlen auf Raumtemperatur liess sich das flexible Halbzeug um einen Winkel von 180° biegen, ohne Delaminierung zu zeigen, und die Abdeckfolien konnten sauber abgezogen werden. Das Halbzeug wurde über ein kantiges Holzbrett (Abmessungen 1,6 × 8,5 × 25 cm) mit der Hand modelliert und anschliessend von oben 20 Minuten mit Leuchtstoffröhren (TL AK 40W/05, Phi-

lips, bestrahlt. Der Abstand Strahler/Substratoberfläche betrug 10 cm. Es resultierte ein harter Formkörper, der an keiner Stelle Weissbruch aufwies.

Beispiel 2

Mit einem schnell-laufenden Rührwerk wurden aus folgenden Komponenten homogene Mischungen hergestellt:

54,5　Teile Harz E
5,5　Teile Styrol
2,4　Teile Calciumstearat
0,75 Teile Magnesiumoxid
10　　Teile Kurzglasfasern
　　　(Länge 0,15 bis 0,2 mm)
30　　Teile Aluminiumoxidhydrat

als Fotoinitiatoren wurden in 3 Proben jeweils 0,06 Teile verschiedener Verbindungen zugesetzt. Zur Eindickung wurden diese Mischungen in PVC-Rahmen (Innenmasse 20 × 20 × 0,5 cm) gegossen, die auf Polyesterfolien ruhten, an der Oberfläche mit Polyesterfolien abgedeckt und anschliessend 30 Minuten lang im Wärmeschrank gehalten. Nach Abkühlung auf Raumtemperatur resultierten klebfreie, gut handhabbare Halbzeuge, von denen die Abdeckfolien leicht abzuziehen waren. Nach einseitiger Entfernung der Folien wurden die Halbzeuge so über Glasrohre (Durchmesser 42 mm) modelliert, dass die folienfreien Seiten die Hälfte der Rohroberfläche bedeckten. Dann wurden die Formteile beidseitig mit Leuchtstoffröhren belichtet. Dabei befanden sich oben im Abstand von 26 cm fünf TLA 40W/05-Strahler und unten im Abstand von 9 cm zum Substrat fünf TL AK 40W/05-Strahler. Nach 30 bzw. 60 Minuten Belichtung wurden vollständig ausgehärtete Formkörper erhalten, wie die Ergebnisse der Härtemessungen in der Tabelle 1 zeigen. Keines der Formteile wies Delaminierungen auf.

Tabelle 1

| Fotoinitiator | Belichtungszeit (min) | Barcolhärte* oben | unten |
|---|---|---|---|
| Benzildimethylketal | 30 | 85–90 | 85–90 |
| Methylolbenzoin- | 30 | 50–70 | max. 60 |
| methyläther | 60 | 85–90 | 85 |
| 2,4,6-Trimethylbenzoyl-diphenyl-phosphinoxid | 30 | 85–90 | 85–90 |

* gemessen mit Impressor 935 bei 23° C

Beispiel 3

Mit einem schnell-laufenden Rührwerk wurden aus folgenden Komponenten homogene Mischungen hergestellt:

54,5 Teile Harz B
5,5 Teile Styrol
2,4 Teile Calciumstearat
10　 Teile Kurzglasfasern)
30　 Teile Aluminiumoxidhydrat

Folgende Eindickmittel wurden zugesetzt:
Probe 1: 1,2 Teile Calciumoxid + 1,2 Teile Calciumhydroxid
Probe 2: 1,2 Teile Calciumoxid + 0,24 Teile Wasser
Probe 3: 2,4 Teile Magnesiumhydroxid

Alle Proben enthielten eine UV-Initiator-Kombination aus 0,045 Teilen 2,4,6-Trimethylbenzoyl-diphenylphosphinoxid und 0,015 Teilen Benzildimethylketal. Die flüssigen Mischungen wurden wie in Beispiel 2 in den beidseitig mit Polyesterfolien abgedeckten Rahmen 30 Minuten bei 80 °C und zusätzlich 5 Tage bei Raumtemperatur eingedickt. Die Abdeckfolien liessen sich mühelos von den Formmassen abziehen. Nach der Formgebung um ein Glasrohr und beidseitiger Belichtung (30 Minuten) wurden harte Formkörper erhalten, die keinerlei Spuren einer Delaminierung zeigten.

Die Oberflächenhärten sind in Tabelle 2 angegeben:

Tabelle 2

| Probe | Barcolhärte oben | (Impressor 35) unten |
|---|---|---|
| 1 | 80–90 | 85–90 |
| 2 | 80–85 | 60–85 |
| 3 | 85–87 | 80–87 |

Beispiel 4

Mit einem Laborrührer wurde aus Harz D mit 0,1% 2,4,6-Trimethyl-benzoyl-diphenylphosphinoxid und 2% Magnesiumoxid eine homogene Mischung hergestellt. Damit wurden 2 Lagen Glasfasermatten (400 g/m²) getränkt und zwischen Polyesterfolien 1 Stunde bei 80 °C eingedickt. Dabei wurde eine Formmassenkonsistenz erreicht, die eine mühelose Verformung mit der Hand gestattete, ohne dass Delaminierung auftrat. Der Glasgehalt des Halbzeugs betrug 25%. Aus diesem Halbzeug (Schichtdicke 3 mm) wurde ein Laminat mit den Abmessungen 10 × 10 × 45 cm herausgeschnitten und die Enden sowie 3 weitere Flächenteile in der Breite mit etwa gleichen Abständen zueinander durch 3 cm breite schwarz eingefärbte PVC-Streifen abgedeckt. Durch Belichtung mit Leuchtstoffröhren (TL AK 40 W/05) im Abstand von 9 cm zur Substratoberfläche (Belichtungszeit 10 min) entstand eine Platte, deren abgedeckte Flächen unvernetzt geblieben waren. Sie konnte um dieses «Scharnier» ohne Anzeichen einer Delaminierung in einem Winkel von 180° gebogen werden. Nach Entfernung der Abdeckfolien wurde das Formteil durch Falten und Überlappen der unvernetzten Enden unter Druck mit den Händen zu einem vierkantigen Rohr mit rechteckigem Querschnitt geformt, der durch weitere Belichtung mit Leuchtstoffröhren (TL AK W/05) vollständig ausgehärtet wurde. Der Verbund an der Überlappung war ausgezeichnet.

Zur weiteren Prüfung der Verbundfestigkeit wurden 2 unbelichtete Laminate (10 × 10 cm) mit einer Rolle aufeinander gewalzt. Die Abdeckfolien waren vorher abgezogen worden. Nach 30 Minuten Belichtung mit Leuchstoffröhren im Abstand von 9 cm zu Substratoberfläche wurde ein gehärteter Formkörper erhalten, dessen beide Schichten ausgezeichneten Verbund zueinander aufwiesen, wie durch Einschlagen eines flachen Metallkeils zwischen den Schichten nachgewiesen wurde.

Beispiel 5

Mit einem schnell-laufenden Rührwerk wurde aus folgenden Komponenten eine homogene Mischung hergestellt:

66,78 Teile Harz
3,34 Teile Styrol
0,07 Teile 2,4,6-Trimethylbenzoyldiphenylphosphinoxid
28,62 Teile Aluminiumoxidhydrat
1,19 Teile Magnesiumoxid

Mit dieser Mischung wurden 2 Lagen Glasfasermatten zwischen Polyesterfolien auf einer kontinuierlich arbeitenden Prepreganlage getränkt und auf eine Dicke von 2 mm ausgewalzt. Zur Eindikkung wurde dieses Band durch eine Wärmezone (3 Etagen-Düsenbandtrockner) geleitet, anschliessend mit Kaltluft gekühlt und aufgerollt. Die Verweilzeit bei 80 °C in der Wärmezone (2,5 m/Länge) betrug 5 Minuten. Der Glasgehalt des Halbzeugs betrug 25%.

Nach 24 Stunden Lagerung bei Raumtemperatur wurde das Halbzeug von der Rolle abgewickelt auf 15 cm Breite gesäumt und mit einer Geschwindigkeit von 6 Upm spiralenförmig auf einen sich drehenden, mit Celluloseesterfolie belegten Wickelkern (Durchmesser 80 cm, Länge 150 cm) derart aufgezogen, dass eine fugenlose Naht entstand. Dabei half das Anpressen der Halbzeugstösse mit einer Stahlwalze. Auf diese Schicht wurde nach Entfernen der Abdeckfolien eine Lage Endlosrovings (450 g/m²) gewickelt, die zuvor mit nichteingedicktem Harz A – initiiert mit 0,1% 2,4,6-Trimethylbenzoyl-diphenylphosphinoxid – getränkt waren. Es folgten abwechselnd jeweils eine Lage getränkte Glasfasermatte und eine Halbzeuglage, insgesamt wurden 3 Folgen aufgebracht. Zur Härtung wurde der Wickelkern in Drehbewegung versetzt (15 Upm) und ein Strahlerfeld aus 18 Leuchtstoffröhren (TL A 40/05, 120 cm) im Abstand von 15 cm zur Halbzeugoberfläche eingeschaltet. Dabei leuchtete das Belichtungsfeld die halbe Oberfläche des zylindrischen Kerns aus. Ausserdem wurde mit einem IR-Strahler bestrahlt (IRE-3000, Philips). Nach 40 Minuten Belichtung resultierte ein zylindrisches Formteil, dessen Schichtverbund ausgezeichnet war.

Beispiel 6
Pressverfahren

Es wurde eine Mischung hergestellt aus:

100 Teile Harz G
2 Teile Magnesiumoxid
100 Teilen Aluminiumoxidhydrat
0,1 Teile 2,4,6-Trimethylbenzoyl-diphenylphosphinoxid

Mit dieser Mischung wurden 2 Lagen einer Glasfasermatte (450 g/m²) getränkt und zwischen 2 Folienlagen (Polyvinylalkohol, 35 µm) ausgewalzt. Nach einer Reifezeit von 24 Stunden bei Raumtemperatur war die Masse soweit eingedickt, dass sie verformt werden konnte. Ein Laminatabschnitt wurde auf eine kalte Pressform gelegt und das Werkzeug zugefahren. Das Laminat wurde mit geringem Druck (5 bis 10 bar) kalt verformt. Einige Sekunden nach dem Schliessen des Werkzeugs wurde es wieder geöffnet. Die Masse war so steif, dass das Teil entformt werden konnte. Die Bestrahlung mi UV-Licht erfolgte in 10 cm Abstand (Lampentyp: TLA 05, 40 W). Nach 20 Minuten war der Formkörper hart.

Beispiel 7
Profilziehen

Es wurde eine Mischung hergestellt aus

100 Teilen Harz D
1,2 Teilen Magnesiumoxid
0,1 Teil 2,4,6-Trimethylbenzoyl-diphenylphosphinoxid

10 Glasfaser-Rovingstränge (2130 tex) wurden durch ein Tränkbad aus obiger Mischung gezogen. Nach dem Abstreifen des Harzüberschusses wurden die Rovingstränge zu einem 5 cm breitem Band zusammengeführt und auf eine Trommel aufgewickelt. Das Laminat (Glasgehalt 60%) wurde mit einer Celluloseester-Folie abgedeckt und so gegen Styrolverdunstung geschützt. Nach dem Eindicken der Masse (1 Tag bei Raumtemperatur) wurde der Roving abgewickelt. 20 Rovingstränge wurden zusammengefasst und durch eine Runddüse von 7 mm Durchmesser gezogen. Von diesem Strang wurden 1 m lange Stücke abgeschnitten und gitterförmig übereinandergelegt. Die Härtung erfolgte unter einem Lichtfeld von 1 × 1,2 m Fläche im Abstand von 10 cm. Nach 30 Minuten waren die Stränge durchgehärtet und auf den Kreuzungspunkten miteinander verklebt.

**Patentansprüche**

1. Verfahren zur Herstellung von Formkörpern, gekennzeichnet durch folgende Schritte:

A) Herstellen eines Gemisches aus
1. einem ungesättigten Polyester,
2. einer copolymerisierbaren Vinylverbindung,
3. 0,005 bis 0,5 Gew.% eines Inhibitors,
4. 0,01 bis 1 Gew.% eines Fotoinitiators,
5. 0,2 bis 5 Gew.% eines als Eindickmittel wirkenden Oxids oder Hydroxids von Lithium, Magnesium oder Calcium, oder eines Metallalkoholats,
6. 5 bis 60 Gew.% eines faserförmigen Verstärkungsmaterials, gegebenenfalls
7. mindestens 1 Gew.% eines UV-Licht-durchlässigen pulverförmigen Aluminiumoxidhydrats, sowie gegebenenfalls
8. weiteren üblichen Zusatzstoffen,
wobei sich die Prozentangaben auf das Gemisch beziehen, mit der Massgabe, dass auf 100 Gewichtsteile der Komponenten 1+2 maximal 100 Gewichtsteile der Komponente 7 eingesetzt werden,
B) gegebenenfalls Aufbringen des Gemisches auf ein flächiges Trägermaterial,
C) Eindicken des Gemisches zu einem Halbzeug,
D) Verformen des Halbzeugs,
E) Aushärten durch Bestrahlung mit UV-Licht,
F) gegebenenfalls thermische Nachbehandlung.

2. Verfahren zur Herstellung von Formkörpern nach Anspruch 1, dadurch gekennzeichnet, dass man beim Aushärten einen Teilbereich des Halbzeugs mit einer für UV-Licht undurchlässigen Folie abdeckt, an den abgedeckten, nicht gehärteten Bereichen eine weitere Verformung des Halbzeugs oder eine Verbindung mit weiterem, ungesättigtem Polyestermaterial vornimmt und dann nach der Entfernung der lichtundurchlässigen Folie härtet.

## Claims

1. A process for the production of shaped articles, which comprises the following steps:
A) preparing a mixture of
1. an unsaturated polyester,
2. a copolymerizable vinyl compound,
3. from 0.005 to 0.5% by weight of an inhibitor,
4. from 0.01 to 1% by weight of a photoinitiator,
5. from 0.2 to 5% by weight of an oxide or hydroxide of lithium, magnesium or calcium, or of a methyl alcoholate, which compound acts as a thickener,
6. from 5 to 60% by weight of a fibrous reinforcing material, with or without
7. at least 1% by weight of a pulverulent aluminum oxide hydrate which transmits ultraviolet light, and with or without
8. other conventional additives,
the precentages being based on the total mixture, with the proviso that not more than 100 parts by weight of component 7 are used per 100 parts by weight of components 1 and 2 together,
B) where appropriate, applying the mixture to a sheetlike carrier,
C) thickening the mixture to give a semi-finished product,
D) shaping the latter,
E) curing it by irradiation with ultraviolet light, and
F) where appropriate, carrying out a subsequent heat-treatment.

2. A process for the production of shaped articles as claimed in claim 1, wherein, during curing, an area of the semifinished product is masked with a film which is opaque to ultraviolet light, the masked, non-cured area of the semifinished product is subjected to further shaping, or further unsaturated polyester material is bonded to this area and then, after removal of the opaque film, the area is cured.

## Revendications

1. Procédé de préparation de corps formés caractérisé par les étapes suivantes:
A) Préparation d'un mélange de
1. un polyester insaturé,
2. un composé vinylique copolymérisable,
3. 0,005 à 0,5% en poids d'un inhibiteur,
4. 0,01 à 1% en poids d'un photoinitiateur,
5. 0,2 à 5% en poids d'un oxyde ou hydroxyde de lithium, magnésium ou calcium, agissant comme épaississeur, ou d'un alcoolate métallique,
6. 5 à 60% en poids d'un matériau de renforcement en forme de fibres, éventuellement
7. au moins 1% en poids d'un hydrate d'oxyde d'aluminium pulvérulent, laissant passer la lumière U.V, ainsi qu'éventuellement,
8. autres additifs usuels,
les pourcentages se rapportant au mélange et sous réserve que, pour 100 parties en poids des composants 1 + 2, on n'introduise au maximum que 100 parties en poids du composant 7,
B) application éventuelle du mélange sur un matériau support plan,
C) transformation en demi-produit par épaississement du mélange,
D) formage du demi-produit,
E) durcissement par irradiation à la lumière U.V.,
F) éventuellement, post-traitement thermique.

2. Procédé de préparation de corps formés selon la revendication 1, caractérisé par le fait que, pour le durcissement, on recouvre une zone partielle du demi-produit avec une feuille ne laissant pas passer la lumière U.V, on procède, sur les zones recouvertes, non durcies, à un nouveau formage ou une liaison avec une autre matière polyester insaturée, et puis, après élimination de la feuille ne laissant pas passer la lumière, on durcit.